Europäisches Patentamt

European Patent Office

Office européen des brevets

(19)

(11) Numéro de publication : **0 514 253 A1**

(12) **DEMANDE DE BREVET EUROPEEN**

(21) Numéro de dépôt : **92401288.3**

(22) Date de dépôt : **12.05.92**

(51) Int. Cl.⁵ : **G11B 7/09, G11B 7/007**

(30) Priorité : **14.05.91 FR 9105810**

(43) Date de publication de la demande :
**19.11.92 Bulletin 92/47**

(84) Etats contractants désignés :
**DE ES FR GB IT NL SE**

(71) Demandeur : **ART TECH GIGADISC ATG**
**Avenue du Général Eisenhower**
**F-31047 Toulouse (FR)**

(72) Inventeur : **Bec Daniel**
**THOMSON-CSF, SCPI, Cédex 67**
**F-92045 Paris la Défense (FR)**

(74) Mandataire : **Ruellan, Brigitte et al**
**THOMSON-CSF SCPI**
**F-92045 PARIS LA DEFENSE CEDEX 67 (FR)**

(54) **Support d'informations lisibles optiquement, et appareil de lecture d'un tel support.**

(57) La présente invention concerne un support mobile d'informations lisibles optiquement, dont l'ordonnancement définit un ensemble de pistes ayant un format de type échantillonné, chaque piste présentant des zones prégravées, dites zones de préformat, et des zones de données destinées à l'utilisateur, l'accès auxdites pistes s'effectuant à l'aide de marques prégravées (20, 21), dites marques d'accès, représentant sur chaque piste au moins une partie de l'adresse de cette dernière. Ce support est dépourvu de marques spécifiques de suivi radial. L'invention concerne aussi un appareil de lecture d'informations gravées à la surface d'un support du type de celui décrit ci-dessus ; cet appareil effectue le suivi radial à l'aide des informations issues de la lecture des marques d'accès (20, 21).

L'invention s'applique aux disques optiques numériques.

FIG. 4

EP 0 514 253 A1

La présente invention concerne un support mobile contenant des informations sous forme de marques disposées à sa surface, lisibles optiquement par faisceau laser et dont l'ordonnancement définit un ensemble de pistes, un procédé d'élaboration d'un signal d'erreur de suivi desdites pistes par le faisceau laser de lecture, ainsi que l'appareil permettant la lecture dudit support mobile.

Les marques disposées sur le support peuvent se présenter sous différents aspects. Il peut s'agir, par exemple, de gravures en creux ou d'éléments en saillie. Dans la suite de l'exposé, le choix est fait de marques gravées en creux de forme oblongue.

Les dimensions de ces marques sont choisies de l'ordre de grandeur de la longueur d'onde du faisceau laser. Ainsi l'interaction de la tache de lecture avec une marque est-elle source d'une onde diffractée dont le rayonnement plus ou moins dispersé contient l'information souhaitée.

Dans le cas, qui sera toujours pris en exemple par la suite, de supports mobiles en forme de disques, l'information est enregistrée le long de pistes constituées soit d'une spirale unique s'étendant du centre du disque à la périphérie, soit d'une série de cercles concentriques. Pendant la lecture, le disque est mobile. Son mouvement est un mouvement de rotation dont l'axe, perpendiculaire à la surface du disque, passe par le centre de ce dernier. Le suivi des pistes est alors nommé suivi radial.

Il est connu de l'homme de l'art que les informations contenues sur les disques à lecture optique peuvent exister principalement suivant deux types de formats : le format continu composite et le format échantillonné. Par "format", on entend la manière dont sont agencées les informations préenregistrées permettant l'inscription et la lecture ultérieure d'informations par l'utilisateur.

Dans le premier cas l'information de format est distribuée continûment tout au long de la piste alors que dans le deuxième cas elle est contenue sous forme de blocs successifs.

Dans le cas du format échantillonné, chaque bloc est constitué d'une zone d'en-tête, dite zone de préformat, suivie d'une zone réservée à l'enregistrement des données de l'utilisateur. Chaque zone de préformat contient toutes les marques qui, par lecture optique, permettent un bon fonctionnement du lecteur-enregistreur. Les marques de préformat sont de quatre types : focalisation, suivi radial, accès, synchronisation.

Les marques de focalisation, qui peuvent d'ailleurs se limiter à une zone non gravée, sont destinées à surveiller et à corriger la focalisation du faisceau laser dans la zone contenant les pistes.

Les marques de suivi radial permettent de corriger les décentrements du faisceau suivant la direction radiale.

Les marques d'accès permettent d'accéder à une piste d'adresse donnée.

Les marques de synchronisation permettent de commander les horloges assurant le bon fonctionnement des diverses phases de lecture-enregistrement.

Le suivi radial de la piste, comme d'ailleurs la focalisation ou l'accès, sans correction d'aucune sorte, nécessiterait à chaque instant un positionnement relatif de la tête de lecture et du disque quasiment parfait. Ceci n'est pas réalisable avec des appareils de lecture et des disques que l'on veut de fabrication simple.

Ainsi est-on amené à pratiquer un asservissement du suivi radial. Dans le cas du format échantillonné, des marques, placées à intervalles réguliers, permettent de corriger les décentrements du faisceau de lecture dus aux imperfections des positions relatives de la tête de lecture et du disque. Dans le cas du format continu composite, on fait appel à un sillon continu ou quasi continu.

Les moyens de suivi radial qui servent alors à assurer l'exploitation des informations issues des marques de suivi comprennent, entre autres, une détection optique des écarts de suivi de piste et un organe de déplacement de la tache de lecture actionné en vue de compenser les écarts.

A titre d'exemple, il peut être décrit la méthode dite de "push-pull" qui consiste à utiliser deux cellules photodétectrices détectant chaucune une fraction du faisceau de suivi radial.

Les deux cellules sont disposées dans l'espace de part et d'autre de l'axe optique du faisceau et les signaux électriques produits par ces deux cellules sont transmis aux entrées d'un amplificateur différentiel. Lorsque la tache du faisceau de lecture est centrée sur la piste, le signal en sortie de l'amplificateur est nul. Lorsqu'il y a un décentrement du faisceau, le signal en sortie de l'amplificateur est représentatif du sens et de l'amplitude du décentrement.

Le signal de sortie de l'amplificateur différentiel est, dans tous les cas, transmis à un circuit d'asservissement radial qui permet la correction du décentrement.

Si on a affaire au format échantillonné, le dispositif de suivi comporte des moyens échantillonneurs disposés à la sortie des moyens photodétecteurs afin de prélever le signal photodétecté au cours d'intervalles de temps préalablement choisis : ceux pendant lesquels la tache de lecture passe au-dessus des marques de suivi radial.

Afin d'améliorer la qualité de ce type d'asservissement radial deux principaux moyens sont connus par l'homme de l'art.

Le premier consiste à imprimer au faisceau laser une légère oscillation à fréquence fixe de part et d'autre de l'axe moyen de sa trajectoire.

Le second consiste à placer périodiquement une ou plusieurs marques de suivi de piste de façon légèrement décentrée par rapport à l'axe moyen de la trajectoire du faisceau, qui n'est alors soumis à aucune oscillation. Ce deuxième moyen produit les mêmes effets que le premier.

On conçoit aisément les inconvénients associés à chacun des moyens décrits ci-dessus :

Dans le premier cas il faut imprimer au faisceau laser une oscillation et dans le deuxième cas il faut faire appel, lors de la fabrication du disque, à un système déflecteur de faisceau optique afin de créer les marques déportées.

L'invention ne présente pas cet inconvénient. La présente invention a pour objet, selon un premier de ses aspects, un support mobile d'informations lisibles optiquement, dont l'ordonnancement définit un ensemble de pistes ayant un format de type échantillonné, chaque piste présentant des zones prégravées, dites zone de préformat, et des zones de données destinées à l'utilisateur, l'accès auxdites pistes s'effectuant à l'aide de marques prégravées dites marques d'accès, représentant sur chaque piste au moins une partie de l'adresse de cette dernière, caractérisé en ce qu'il est dépourvu de marques spécifiques de suivi radial.

Ceci est avantageux non seulement parce que cela diminue la place occupée par les marques de préformat, mais surtout parce que cela supprime le besoin de faire appel à un système déflecteur de faisceau optique pour réaliser des marques déportées.

Pour lire un tel support on prévoit, aussi selon l'invention, dans le cas du format échantillonné, un appareil de lecture d'informations gravées à la surface d'un support mobile, lisibles optiquement, dont l'ordonnancement définit un ensemble de pistes, l'accès de la tête de lecture auxdites pistes s'effectuant à l'aide de marques prégravées, dites marques d'accès, représentant sur chaque piste au moins une partie de l'adresse de cette dernière, caractérisé en ce que ledit appareil effectue le suivi radial à l'aide des informations issues de la lecture des marques d'accès.

Ainsi l'appareil selon l'invention est-il particulièrement bien adapté à la lecture des disques décrits dans le brevet français n° 85 17560 et publié sous le n° 2 597 248.

Ce brevet traite de l'accès aux pistes dans le cas où celles-ci sont gravées dans un format de type échantillonné.

Conformément à ce brevet, chaque piste contient le même nombre de marques d'accès, distribuées régulièrement sur le disque et ordonnées suivant certaines directions radiales, la variation des marques d'accès d'une piste à l'autre, suivant lesdites directions radiales, se faisant selon le code binaire réfléchi ou code de Gray .

Pour mémoire, le tableau ci-dessous rappelle l'évolution du code binaire réfléchi ou code de Gray quand celui-ci est défini, par exemple, sur trois bits $b_2$, $b_1$, $b_0$ :

| $b_2$ | $b_1$ | $b_0$ |
|---|---|---|
| 0 | 0 | 0 |
| 0 | 0 | 1 |
| 0 | 1 | 1 |
| 0 | 1 | 0 |
| 1 | 1 | 0 |
| 1 | 1 | 1 |
| 1 | 0 | 1 |
| 1 | 0 | 0 |

On voit que ce code suit une évolution telle qu'il y a changement d'un seul bit d'une combinaison à l'autre. C'est de cette manière qu'évoluent les marques d'accès suivant une direction radiale.

Ainsi, sur le disque, existe-t-il, suivant certaines directions radiales, des zones situées de part et d'autre. de la trajectoire idéale du faisceau, telles que la zone adjacente d'un côté comporte des marques alors que la zone adjacente de l'autre côté n'en comporte pas.

On utilise avantageusement cette configuration pour le suivi radial en donnant à la tache de lecture et aux marques d'accès des dimentions relatives telles que le signal d'erreur élaboré est issu de la dissymétrie détectée dans lesdites zones.

Ce procédé de suivi radial et l'appareil correspondant peuvent être utilisés pour la lecture de disques pourvus de marques spécifiques de suivi radial.

La présente invention sera décrite en se référant à un mode de réalisation tel que les marques d'accès sont codées sur trois bits et que l'on définit un code d'accès par bloc.

Il est bien entendu possible de prévoir un code composé d'un nombre de bits supérieur à trois. De même, les codes d'accès peuvent être distribués tous les n blocs, n étant un entier supérieur à un, la seule condition à respecter étant que les données d'adresse aient une fréquence d'apparition suffisante pour permettre un bon suivi radial.

D'autres caractéristiques et avantages de la présente invention apparaîtront à la lecture de la description du mode de réalisation choisi, faite avec référence aux figures ci-annexées dans lesquelles :

- la figure 1 est la représentation schématique d'un dispositif de lecture optique d'un support d'informations prégravées conforme à la présente invention ;
- la figure 2 représente un élément de piste dans un format de type échantillonné ;
- les figures 3A et 3B représentent les positions relatives que peuvent occuper les marques de préformat et les données de l'utilisateur ;
- la figure 4 représente une succession de zones contenant les marques d'accès distribuées suivant une direction radiale. Selon le mode de réalisation choisi, l'accès est réalisé sur 3 bits en code de Gray ;
- la figure 5 représente, pour chacun des 3 bits du code d'accès de la figure 4, le signal détecté qui serait recueilli en sortie du photodétecteur si le faisceau de lecture se déplaçait suivant une direction radiale.

Sur toutes les figures les mêmes repères désignent les mêmes éléments.

Il a été mentionné précédemment que pour un support mobile en forme de disque l'information est enregistrée le long de pistes constituées soit d'une spirale unique s'étendant du centre du disque à la périphérie, soit d'une série de cercles concentriques.

Ainsi sur une longueur de piste très petite devant le rayon du disque peut-on identifier ladite longueur à un segment de droite.

Cette approximation sera toujours prise en compte par la suite et on représentera toujours des morceaux de pistes de longueurs suffisamment petites pour qu'ils soient identifiés à des segments de droite, lesdits segments permettant, si nécessaire, de définir différents axes.

La présente invention est décrite en se référant à des marques de prégravure de forme oblongue. Il est évident pour l'homme de l'art que d'autres types de marques peuvent être utilisés, notamment des marques circulaires.

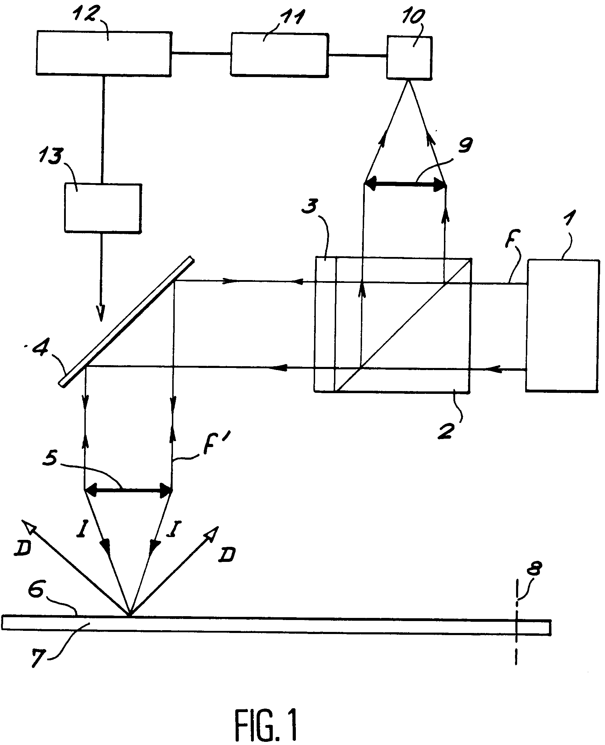

La figure 1 décrit un exemple de dispositif de lecture optique d'un support d'informations prégravées conforme à la présente invention.

Un module laser 1 envoie un faisceau lumineux cylindrique f sur un cube séparateur de polarisation 2 suivi d'une lame quart d'onde 3. Le faisceau f traverse l'ensemble constitué du cube et de la lame quart d'onde pour atteindre un miroir 4 qui renvoie le faisceau f sur un objectif 5 dont le rôle est de focaliser le faisceau sur la surface 6 du support mobile 7.

Le support mobile 7 tourne autour d'un axe 8. Le faisceau incident qui arrive sur le support mobile est noté I.I et le faisceau diffracté par le support est noté D.D.

La fraction du faisceau D.D qui se retrouve dans l'objectif 5 crée un faisceau f' qui est à son tour réfléchi par le miroir 4.

Le faisceau f' ainsi réfléchi traverse la lame quart d'onde 3.

Le cube séparateur de polarisation 2 envoie alors le faisceau f' sur la lentille 9 qui focalise ledit faisceau sur le photodétecteur 10 duquel est issu un signal contenant une information relative au décentrement du faisceau de lecture. A l'aide d'un dispositif échantillonneur-bloqueur 11, ledit signal issu du photodétecteur permet de créer le signal d'erreur radiale. Ce dernier est alors envoyé dans un circuit d'asservissement 12 qui a pour fonction de commander un moteur 13 dont l'action est de corriger la position du miroir 4 afin de réaligner le faisceau.

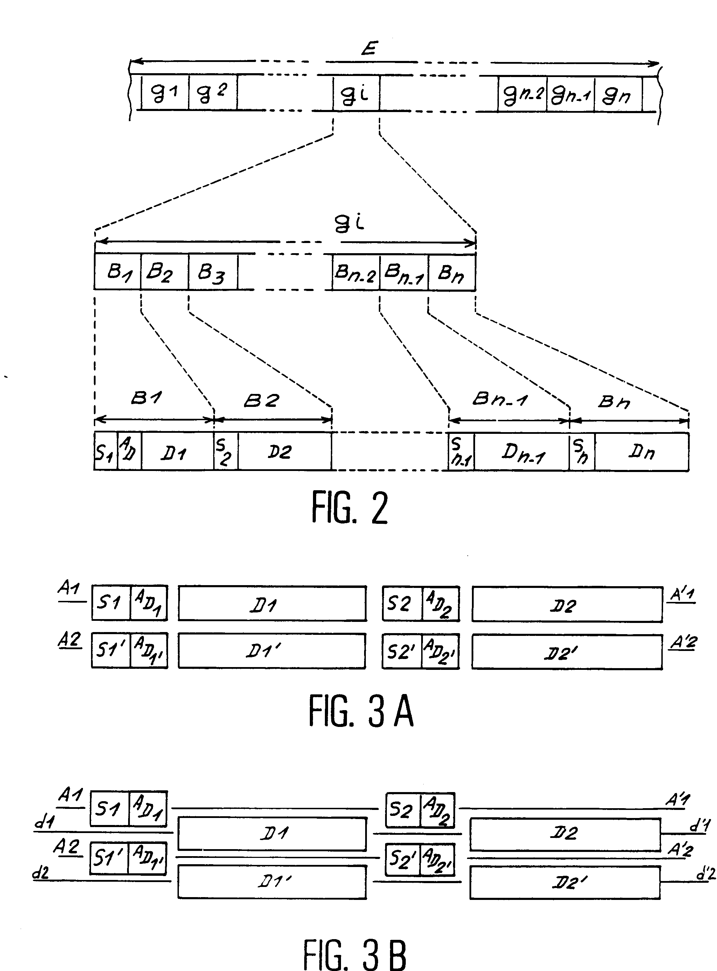

La figure 2 représente un élément de piste E dans un format de type échantillonné. Cet élément de piste E est constitué de m sous-ensembles ou granules $g_1$ à $g_m$. Chaque granule est constitué de n blocs B1 à Bn.

De façon générale, seul le premier bloc B1 contient les marques d'accès. La zone de préformat du bloc B1 est alors constituée d'une zone de service S1, contenant les marques de synchronisation et de focalisation, et d'une zone d'adresse AD, contenant les marques d'accès.

Les zones de préformat des autres blocs Bi (i = 2 à n) ne sont constituées que de zones de service Si (i = 2 à n).

Selon le mode de réalisation décrit, il y a une zone d'adresse par bloc (n = 1).

Les figures 3A et 3B représentent les positions relatives que peuvent occuper les marques de préformat et les données de l'utilisateur.

Les zones de préformat contiennent des marques dont l'ordonnancement définit un axe. Ainsi, suivant les figures 3A et 3B, l'ordonnancement des marques situées dans les zones de préformat S1, AD1, S2, AD2 d'une même ligne définit-il l'axe A1 A'1.

De même, l'ordonnancement des marques situées dans les zones de préformat S1', AD1', S2' et AD2' d'une ligne voisine définit-il l'axe A2 A'2.

Il y a deux manières de positionner les données de l'utilisateur par rapport aux marques de préformat .

Suivant la première manière (figure 3A) les données de l'utilisateur sont gravées suivant les axes définis par les marques de préformat : ainsi les données contenues dans les zones D1 et D2 sont-elles alignées avec les données contenues dans les zones de préformat S1, AD1, S2 et AD2. De même, les données contenues dans les zones D1' et D2'sont-elles alignées avec les données contenues dans les zones de préformat S1', AD1', S2'et AD2'.

Suivant la deuxième manière (figure 3B) les données de l'utilisateur sont gravées suivant un axe médian situé entre les axes définis par les marques de préformat de deux pistes voisines.

Ainsi, les données contenues dans les zones D1 et D2 sont-elles alignées sur un axe d1 d'1 parallèle aux deux axes A1 A'1 et A2 A'2 et situé à égale distance de ces deux axes.

De même, les données contenues dans les zones D1' et D2' sont-elles alignées sur un axe d2 d'2 symétrique de l'axe d1 d'1 par rapport à l'axe A2, A'2.

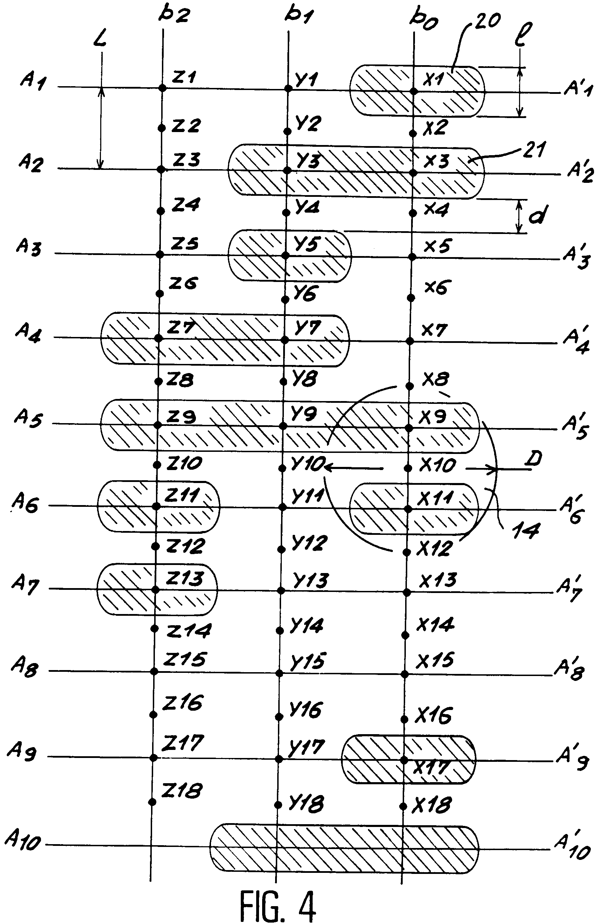

La figure 4 représente la vue de dessus d'un nombre A de codes d'accès, en l'occurence dix, situés sur une succession radiale de A zones d'adresse voisines.

Selon le mode de réalisation décrit seuls trois bits b2, b1, b0 définissent le code d'accès de chaque zone d'adresse.

Sur cette figure, les zones hachurées 20, 21, etc... représentent les marques de prégravure. Les marques d'accès définissent des axes successifs parallèles entre eux et notés de A1 A'1 à A10 A'10. Ces axes sont distants les uns des autres de la même longueur L.

Suivant l'axe A1 A'1, le code b2 ,b1 ,b0 vaut 110 ; suivant l'axe A2 A'2, 100 ; suivant l'axe A3 A'3, 101 ; etc... On retrouve bien une progression radiale des codes d'accès par changement d'un seul bit d'un axe de préformat à l'autre.

Sur cette même figure 4, la progression radiale de chaque bit est repérée par une succession de points: X1 à X18 pour le bit b0, Y1 à Y18 pour le bit b1 et Z1 à Z18 pour le bit b2.

Chaque marque d'accès a une largeur 1 et la distance qui sépare, dans la direction radiale, deux marques d'accès voisines est d.

Le faisceau laser crée une tache circulaire de focalisation 14, à la surface du disque. Le diamètre D de cette tache est tel que celle-ci interfère, suivant une direction radiale, avec deux marques d'accès contigües.

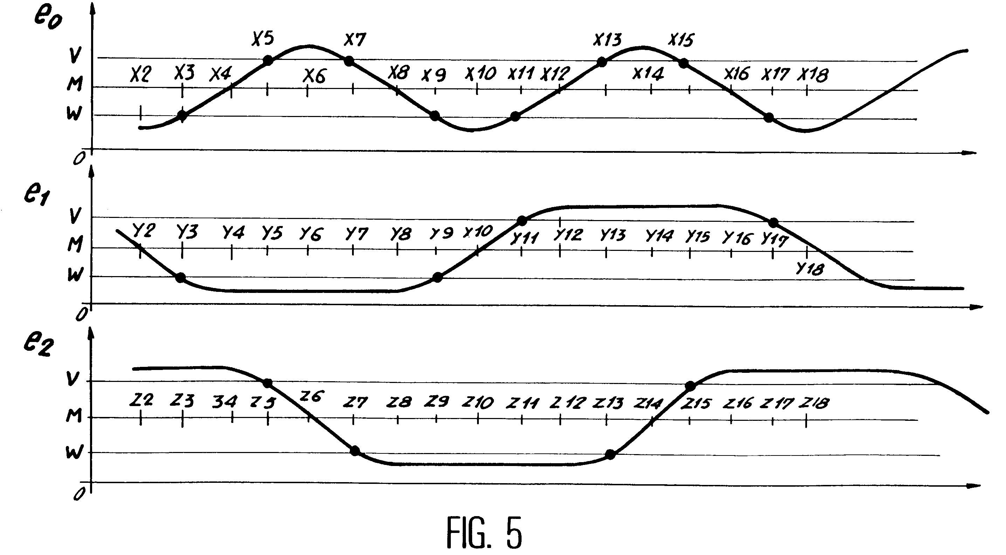

La figure 5 représente, pour chacun des trois bits du code d'accès, la progression du signal détecté, par exemple un courant, qui serait recueilli en sortie du photodétecteur si le faisceau de lecture se déplaçait suivant une direction radiale.

Les signaux détectés associés aux bits b2, b1, b0 sont respectivement notés e2, e1, e0. Sur ces courbes, les directions radiales sont repérées par l'ensemble des points Xi, Yi, Zi (i = 1 à 18) de même qu'en figure 4.

Supposons que le photodétecteur se déplace suivant la direction radiale définie par l'ensemble des Xi. La progression vers les Xi d'indice i croissant correspond, par exemple, à une progression radiale allant du centre vers la périphérie du disque. Compte-tenu de la largeur I des marques d'accès, de la distance d séparant deux marques d'accès voisines et du diamètre D de la tache circulaire de focalisation 14 du faisceau laser, on recueille un signal e0 très sensiblement sinusoïdal comme indiqué en figure 5.

De même, si la tache de lecture effectue une progression suivant les directions radiales définies par les ensembles respectifs de points Yi et Zi, on recueille les signaux détectés respectifs e1 et e2.

Pour les mêmes raisons que précédemment, les zones de transition entre niveaux minimum et maximum des signaux e1 et e2 sont très sensiblement des portions de sinusoïdes.

Comme on peut le constater les courbes e0, e1 et e2 oscillent toutes autour d'une valeur moyenne M.

Il a été précisé précédemment que les données de l'utilisateur peuvent être avantageusement gravées, soit suivant l'axe défini par les marques de préformat (cf Figure 3A), soit suivant un axe médian aux deux axes de préformat de deux pistes contigües (cf Figures 3B).

Nous allons décrire chacun de ces deux cas.

Dans le premier cas, les données de l'utilisateur sont gravées et donc lues suivant l'axe défini par les marques de préformat. Quand le faisceau laser est correctement positionné, le centre de sa tache circulaire de focalisation parcourt l'un des axes défini par un triplet de points successifs d'indice impair. Ces points sont représentés sur les figures 4 et 5.

Sur la figure 5, on voit que, dans le cas étudié, deux signaux concourrent à définir le décentrement du faisceau de lecture. Ce sont les deux signaux qui, pris parmi les trois détectés lors de la lecture du code d'accès, ont un niveau qui peut varier en fonction du décentrement radial du faisceau. Par exemple, suivant l'axe défini par le triplet X7, Y7, Z7) les signaux utiles sont e0 et e2.

Quant le faisceau est correctement centré, il vient : $e0 = V$ et $e2 = W$.

On construit alors le signal d'erreur en ajoutant algébriquement les écarts respectifis de e0 par rapport à V et de e2 par rapport à W.

Ainsi, l'erreur radiale peut-elle sécrire : $e/rad = -(e0 - V) - (e2 - W)$

Suivant l'expression ci-dessus, e/rad est une quantité algébrique positive quand le faisceau s'éloigne du centre du disque et négative dans l'autre sens.

Cette convention de signe est arbitraire et une convention de signe opposée serait tout aussi valable. Il est évident pour l'homme de l'art que seul le signe de la fonction de transfert de la boucle d'asservissement complète a de l'importance.

Par raison de symétrie, on constate que V et W ont des valeurs telles que $V + W = 2M$.

Ainsi, une autre expression de e/rad est-elle

$$e/rad = -(e0 - M) - (e2 - M)$$

On peut ainsi calculer, avec les mêmes conventions de signe que ci-dessus, les formules donnant l'erreur radiale suivant tous les axes définis par les triplets successifs de points d'indices impairs.

| Triplets $X_i$, $Y_i$, $Z_i$ | e/rad |
|---|---|
| X3, Y3, Z3 | $+(e0 - M) - (e1 - M)$ |
| X5, Y5, Z5 | $+(e0 - M) - (e2 - M)$ |
| X7, Y7, Z7 | $-(e0 - M) - (e2 - M)$ |
| X9, Y9, Z9 | $-(e0 - M) + (e1 - M)$ |
| X11, Z11, Y11 | $+(e0 - M) + (e1 - M)$ |
| X13, Y13, Z13 | $+(e0 - M) + (e2 - M)$ |
| X15, Y15, Z15 | $-(e0 - M) + (e2 - M)$ |
| X17, Y17, Z17 | $-(e0 - M) - (e1 - M)$ |

Dans tous les cas, cette erreur s'exprime d'une part en fonction des deux seuls signaux qui, pris parmi les trois détectés lors de la lecture du code d'accès, ont un niveau qui varie en fonction du décentrement radial du faisceau et d'autre part en fonction de la valeur moyenne M. Une manière avantageuse d'exprimer l'erreur radiale est donc de le faire en fonction de la valeur moyenne M.

Si on note $\overline{e0}$, $\overline{e1}$ et $\overline{e2}$ les signaux dont les courbes représentatives seraient les symétriques par rapport à M, respectivement de e0, e1 et e2, il vient :

$M = 1/2$ $(ei + \overline{ei})$ pour tout indice $(i = 0,1,2)$

Le calcul de M peut donc s'effectuer à partir d'un signal ei et du signal $\overline{ei}$ symétrique de ei par rapport à M.

De fait, une manière avantageuse de disposer les codes d'accès sur une même piste est -elle d'alterner la polarité des codes d'accès sur deux blocs successifs.

On définit donc sur une même piste un ensemble de blocs dits pairs et un ensemble de blocs dits impairs.

Le code b2, b1, b0 d'un bloc pair devient donc $\overline{b2},\overline{b1},\overline{b0}$ sur le bloc impair qui le suit.

Par définition, le bit $\overline{bi}$ $(i = 0,1,2)$ et le complémentaire à 1 du bit bi $(i = 0,1,2)$.

Cette modification ne gêne en rien la lecture des adresses telle qu'elle est définie dans le brevet français N°2 597 248.

En effet, on connait à chaque instant la nature paire ou impaire du bloc qu'on lit. Il suffit alors d'effectuer, dans le cas de la lecture du code d'accès d'un bloc impair, le complément à 1 de chacun des bits du code d'accès issu de la lecture des signaux $\overline{ei}$ $(i = 0, 1, 2)$ pour retrouver la bonne adresse.

Avantageusement, la valeur M est calculée à partir de quelques échantillons de signaux ei et $\overline{ei}$ successifs. A l'aide de dispositifs échantillonneurs-bloqueurs cette valeur moyenne est mémorisée pour servir de référence afin d'élaborer le signal d'erreur de suivi de piste.

Dans le cas qui vient d'être décrit, la formule générale de l'erreur radiale peut donc s'écrire :

$$e/rad = Sm (em - M) + Sn (en - M)$$

M étant la valeur moyenne définie précédemment,

em et en étant les deux signaux pris parmi les trois détectés lors de la lecture du code d'accès d'un bloc pair ou impair dont le niveau varie en fonction du décentrement du faisceau, Sm étant un nombre entier relatif égal à plus ou moins un, dont la valeur est choisie de façon que la quantité Sm (em - M) soit un nombre positif ou négatif quand le faisceau s'éloigne du centre du disque et respectivement négatif ou positif dans le cas contraire, Sn étant aussi un nombre entier relatif égal à plus ou moins un dont la valeur est choisie de façon que la quantité Sn(en - M) soit un nombre positif ou négatif quand le faisceau s'éloigne du centre du disque et respectivement négatif ou positif dans le cas contraire.

L'adresse contenue dans le code de Gray étant lue en permanence, on sait choisir les deux signaux em et en parmi les trois disponibles pour calculer e/rad en affectant aux paramètres Sm et Sn les valeurs adéquates.

Dans le deuxième cas, les données de l'utilisateur sont gravées et donc lues suivant un axe parallèle aux deux axes de préformat de deux pistes voisines et situé à égale distance de chacun d'eux.

Le faisceau laser, quand il est correctement positionné, est tel que le centre de sa tache de focalisation parcourt l'un des axes définis par un des triplets de points successifs d'indice pair.

Sur la figure 5, on voit que dans ce cas, un seul signal donne l'information sur le décentrement du faisceau.

Par exemple, suivant l'axe défini par le triplet (X4, Y4, Z4) il s'agit de e0. Le signal e0 variant autour de la valeur moyenne M, l'erreur radiale peut s'écrire :

$$e/rad = e0 - M$$

De même que précédemment e/rad est donc une quantité algébrique choisie positive quand le faisceau s'éloigne du centre du disque et négative quand le faisceau va dans l'autre sens . Il est ici aussi évident, pour l'homme de l'art, que la convention de signe opposée à celle-ci est tout aussi valable.

On peut alors calculer avec les mêmes conventions de signe que ci-dessus les formules donnant l'erreur radiale suivant tous les axes définis par les triplets successifs de points d'indices pairs.

| Triplets (X, Y, Z) | e/rad |
|---|---|
| X2, Y2, Z2 | - (e1 - M) |
| X4, Y4, Z4 | + (e0 - M) |
| X6, Y6, Z6 | - (e2 - M) |
| X8, Y8, Z8 | - (e0 - M) |
| X10, Y10, Z10 | + (e1 - M) |
| X12, Y12, Z12 | + (e0 - M) |
| X14, Y14, Z14 | + (e2 - M) |
| X 16, Y16, Z16 | - (e0 - M) |

La détermination de la valeur moyenne M est ici aussi nécessaire.

Elle est faite de la même manière que dans le cas précédent. La polarité du code d'accès change entre deux blocs successifs d'une même piste et la valeur de M est déterminée à partir de quelques échantillons de signaux ei et $\overline{ei}$ successifs et ensuite mémorisée pour servir de référence.

Le signal d'erreur radiale peut alors s'écrire de façon très générale :

$$e/rad = Sm (em - M)$$

- M étant la valeur moyenne définie précédemment, en étant le seul signal parmi les trois détectés lors de la lecture du code d'accès d'un bloc pair ou impair dont le niveau varie en fonction du décentrement du faisceau de lecture ;

- Sm étant un nombre entier relatif égal à plus ou moins un, dont la valeur est choisie de façon que la quantité Sm (em - M) soit un nombre positif ou négatif quand le faisceau s'éloigne du centre du disque et respectivement négatif ou positif dans le cas contraire.

Le mode de description choisi est relatif à un code de Gray défini sur trois bits. Il est évident pour l'homme de l'art que les formules générales données ci-dessus et calculées à l'aide d'un code de Gray défini sur trois bits, sont, dans chacun des cas étudiés, les mêmes si le code de Gray est défini sur N bits, N étant un entier supérieur à trois. En effet, le code de Gray, quel que soit le nombre de bits qui le compose, ne varie d'une combinaison à l'autre que sur un seul de ses bits.

On a vu précédemment que le calcul de l'erreur radiale est avantageusement effectué à l'aide de la valeur moyenne M. Si cela n'était pas le cas, il faudrait récupérer les informations issues de deux blocs pair et impair successifs et les combiner pour en déduire l'erreur radiale. L'avantage qu'il y a à introduire M est donc de pouvoir réaliser le suivi radial au rythme de lecture des codes d'accès.

Un autre avantage de l'alternance de la polarité des codes d'accès situés sur deux blocs successifs d'une même piste réside dans le fait que la fréquence de lecture des marques d'accès est alors égale à la fréquence moitié de la fréquence de lecture des marques de synchronisation. Cela évite la possibilité, lors de l'initialisation du fonctionnement du disque, que l'horloge du lecteur-enregistreur ne s'accroche sur l'un des bits du code d'accès au lieu de s'accrocher sur la configuration de marques destinées à générer la synchronisation.

De même, selon l'invention, on a vu qu'il y a suppression des marques spécifiques de suivi radial. Or, ces marques, quand elles existent, sont lues au même rythme que les marques de synchronisation.

Leur suppression permet donc d'éviter les mêmes problèmes que ceux pouvant être rencontrés lors de la phase d'initialisation du disque, avec les marques du code d'accès dont la polarité n'est pas inversée.

Ainsi, pour un support mobile d'informations définissant des pistes dans un format de type échantillonné comportant des marques de suivi radial dans chacun des blocs définissant ledit format, inverse-t-on les polarités de deux codes de suivi radial successifs à la manière de ce qui est fait avec les codes d'accès. Les marques de synchronisation sont alors les seules à être invariantes sur deux blocs successifs d'une même piste.


## Revendications

1. Support mobile d'informations lisibles optiquement dont l'ordonnancement définit un ensemble de pistes ayant un format de type échantillonné chaque piste présentant des zones prégravées dites zones de préformat (S1, AD) et des zones de données (D1,D2) destinées à l'utilisateur, l'accès auxdites pistes s'effectuant à l'aide de marques prégravées (20, 21), dites marques d'accès, représentant sur chaque piste au moins une partie de l'adresse de cette dernière, caractérisé en ce qu'il est dépourvu de marques spécifiques de suivi radial.

2. Support mobile selon la revendication 1, caractérisé en ce que les marques d'accès sont codées, suivant la direction radiale, selon un code binaire réfléchi ou code de Gray comprenant N bits, N étant un nombre entier supérieur ou égal à 3.

3. Support mobile selon la revendication 1 ou 2, caractérisé en ce que chaque bit d'un code d'accès d'une piste est le complémentaire à 1 du bit de même rang d'un code ultérieur de ladite piste, notamment du code qui le suit immédiatement.

4. Support mobile selon l'une quelconque des revendications 1 à 3, caractérisé en ce que les données de l'utilisateur sont gravées dans des zones (D1, D2) suivant l'axe (A1 A'1) défini par les marques de préformat d'une même piste.

5. Support mobile selon l'une quelconque des revendications 1 à 3, caractérisé en ce que les données de l'utilisateur sont gravées dans des zones (D1, D2) suivant un axe (d1 d'1) parallèle aux deux axes (A1 A'1 ; A2 A'2) définis par les marques contenues des les zones de préformat (S1, S'1) de deux pistes contiguës et situé à égale distance de ceux-ci.

6. Support mobile d'informations lisibles optiquement dont l'ordonnancement définit un ensemble de pistes ayant un format de type échantillonné, l'accès aux pistes s'effectuant à l'aide de marques prégravées, dites marques d'accès, représentant sur chaque piste au moins une partie de l'adresse de cette dernière, les marques d'accès étant codées en binaire, caractérisé en ce que chaque bit d'un code d'accès d'une piste est le complémentaire du bit de même rang d'un code ultérieur de ladite piste, notamment du code qui le suit immédiatement.

7. Support mobile selon l'une quelconque des revendications 1 à 6, caractérisé en ce que sa forme est celle d'un disque.

8. Appareil de lecture d'informations gravées à la surface d'un support mobile, lisibles optiquement, dont l'ordonnancement définit un ensemble de pistes, l'accès de la tête de lecture auxdites pistes s'effectuant à l'aide de marques prégravées, dites marques d'accès, représentant sur chaque piste au moins une partie de l'adresse de cette dernière, caractérisé en ce que ledit appareil effectue le suivi radial à l'aide des informations issues de la lecture des marques d'accès.

9. Appareil de lecture selon la revendication 8, caractérisé en ce qu'il permet d'effectuer la correction du suivi radial de la piste du support mobile lu, au rythme de la lecture des marques d'accès de la piste.

10. Appareil selon la revendication 8 ou 9, caractérisé en ce qu'étant destiné à la lecture d'un support selon la revendication 3 ou 6, il comprend des moyens (11) pour effectuer la moyenne des signaux lus suivant deux codes complémentaires successifs d'une même piste, des moyens (11) pour mettre en mémoire cette moyenne, et des moyens (11) pour utiliser cette moyenne comme référence afin d'élaborer le signal d'erreur de suivi de piste (e/rad).

11. Appareil selon la revendication 10, caractérisé en ce qu'étant destiné à la lecture d'un support selon les revendications 2 et 4, le signal d'erreur de suivi de piste (e/rad) est donné par l'expression :

$$e/rad = Sm\,(em - M) + Sn\,(en - M)$$

M étant ladite valeur moyenne, em et en étant les deux signaux pris parmi les N détectés lors de la lecture du code d'accès d'un bloc, dont le niveau varie en fonction du décentrement du faisceau de lecture, Sm étant un nombre entier relatif, égal à plus ou moins un, dont la valeur est choisie de façon que la quantité Sm (em - M) soit un nombre positif ou négatif quand le faisceau s'éloigne du centre du disque et négatif ou positif dans le cas contraire, Sn étant aussi un nombre entier relatif, égal à plus ou moins un, dont la valeur est choisie de façon que la quantité Sn (en - M) soit un nombre positif ou négatif quand le faisceau s'éloigne du centre du disque et respectivement négatif ou positif dans le cas contraire.

12. Appareil selon la revendication 10, caractérisé en ce qu'étant destiné à la lecture d'un support selon les revendications 2 et 5, le signal d'erreur de suivi de piste e/rad est donné par l'expression :

$$e/rad = Sm\,(em - M)$$

M étant ladite valeur moyenne ;

em étant le seul signal pris parmi les N détectés lors de la lecture du code d'accès dont le niveau varie en fonction du décentrement du faisceau, Sm étant un entier relatif, égal à plus ou moins un, dont la valeur est choisie de façon que e/rad soit un nombre positif ou négatif quand le faisceau s'éloigne du centre du disque et respectivement négatif ou positif dans le cas contraire.

13. Appareil selon l'une quelconque des revendications 8 à 12, destiné à la lecture d'un support sur lequel existent de part et d'autre de la trajectoire idéale du faisceau sur une piste, une zone adjacente d'un côté comportant des marques et une zone adjacente de l'autre côté n'en comportant pas, caractérisé en ce que le signal d'erreur de suivi radial est élaboré à partir de la dissymétrie détectée dans lesdites zones.

14. Support mobile d'informations lisibles optiquement, dont l'ordonnancement définit un ensemble de pistes ayant un format de type échantillonné contenant l'information sous forme de blocs successifs (B1... Bn), chaque bloc contenant une zone d'en-tête (S1, AD, S2 ... ) dite zone de préformat, suivi d'une zone de données (D1, D2) destinées à l'utilisateur, ladite zone de préformat contenant des marques de synchronisation du faisceau de lecture, les marques d'accès destinées à accéder à une piste d'adresse donnée étant distribuées tous les n blocs, n étant un entier supérieur ou égal à un, caractérisé en ce que seules les marques de synchronisation sont disposées suivant une configuration invariante sur deux blocs successifs d'une même piste.

15. Support selon la revendication 14, caractérisé en ce que la zone de préformat contient des marques spécifiques de suivi radial.

16. Support selon la revendication 14, caractérisé en ce que la zone de préformat est dépourvue de marques spécifiques de suivi radial.

FIG. 1

FIG. 2

FIG. 3 A

FIG. 3 B

11

FIG. 4

FIG. 5

EP 0 514 253 A1

Office européen
des brevets

# RAPPORT DE RECHERCHE EUROPEENNE

Numero de la demande

EP    92 40 1288

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN<br>vol. 10, no. 180 (P-471)(2236) 24 Juin 1986<br>& JP-A-61 026 944 ( SANSUI ELECTRIC CO ) 6 Février 1986<br>* abrégé * | 1,7,8 | G11B7/09<br>G11B7/007 |
| | --- | | |
| A | IBM TECHNICAL DISCLOSURE BULLETIN<br>vol. 31, no. 10, Mars 1989, ARMONK, NY, US<br>pages 256 - 257; 'Sectored Servo Headers for Optical Storage Devices' | 1,2,3,6,<br>7,14,15 | |
| | --- | | |
| A | EP-A-0 368 585 (SONY CORPORATION)<br><br>* revendications 1-4; figure 6 * | 1,2,6,7,<br>8,14,15 | |
| | --- | | |
| A | EP-A-0 339 672 (KABUSHIKI KAISHA TOSHIBA)<br><br>* page 5, ligne 20 - ligne 35; figure 2 * | 1,4,6,7,<br>8,14,15 | |
| | ----- | | **DOMAINES TECHNIQUES RECHERCHES (Int. Cl.5)**<br><br>G11B |

Le présent rapport a été établi pour toutes les revendications

| Lieu de la recherche | Date d'achèvement de la recherche | Examinateur |
|---|---|---|
| LA HAYE | 27 JUILLET 1992 | ANNIBAL P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)